# FASCICULE DE BREVET EUROPEEN

(11) **EP 1 460 593 B1**
(45) Date de publication et mention de la délivrance du brevet: **12.07.2017**
(21) Numéro de dépôt: 04290614.9
(22) Date de dépôt: 05.03.2004
(51) Int. Cl.: G07F 7/08

(54) **Terminal de paiement securise**
Gesichertes Zahlungsterminal
Secure payment terminal

(30) Priorité: 18.03.2003 FR 0303297
(43) Date de publication de la demande: 22.09.2004
(73) Titulaire: Ingenico Group, 75015 Paris (FR)
(72) Inventeur: Mardinian, Grégoire, 95160 Montmorency (FR); Compain, Gérard, 75015 Paris (FR)
(74) Mandataire: Vidon Brevets & Stratégie

(56) Documents cités:
- US-A- 5 493 613
- US-B1- 6 226 749

## Description

L'invention concerne les systèmes de paiement, et plus précisément les terminaux de paiement.

Les systèmes de paiement comprennent généralement des caisses ou caisses enregistreuses. A ces caisses sont maintenant couramment associés des terminaux de paiement, qui permettent d'assurer le paiement par carte bancaire. Il existe aussi des terminaux de paiement utilisés indépendamment de toute caisse enregistreuse. Certains terminaux présentent un ou plusieurs lecteurs de cartes, un afficheur tel qu'un écran LCD et un clavier (ou "pin-pad" en langue anglaise) permettant à l'utilisateur de composer et valider un code d'identification personnel. D'autres terminaux ne présentent pas de clavier, la saisie du code d'identification personnel s'effectuant sur un périphérique distinct. A titre d'exemple, la société Ingenico commercialise sous la marque "Elite 510" un terminal fixe, constitué d'un premier boîtier avec une imprimante, un écran, un lecteur de carte, un clavier et d'un deuxième boîtier relié au premier et présentant un clavier, un écran ainsi qu'en option un lecteur de carte. Le deuxième boîtier peut être utilisé par le client pour la saisie de son code d'identification personnel. La société Ingenico commercialise sous la marque "Elite 730" un terminal portable, avec une imprimante, un lecteur de carte, un clavier et un écran. Le terminal communique par une liaison infrarouge avec sa base.

On pourra consulter le "Manuel de Paiement Electronique" du Groupement des cartes bancaires pour plus de détails sur la structure et le fonctionnement de tels terminaux.

Il existe pour les terminaux de paiement des contraintes de sécurité, pour empêcher toute fraude, comme spécifié dans les spécifications VISA SPED. Ces contraintes portent sur la conception physique des terminaux. En outre, dans la mesure où les terminaux peuvent accepter des applications non-propriétaires, les contraintes portent sur la conception des applications exécutées sur ces terminaux. En particulier, il est important de contrôler qu'une application implantée sur le terminal après sa livraison par le fabricant ne puisse par un affichage sur l'écran du terminal, inciter l'utilisateur à entrer sur le clavier son code d'identification personnel et recueillir ensuite ce code.

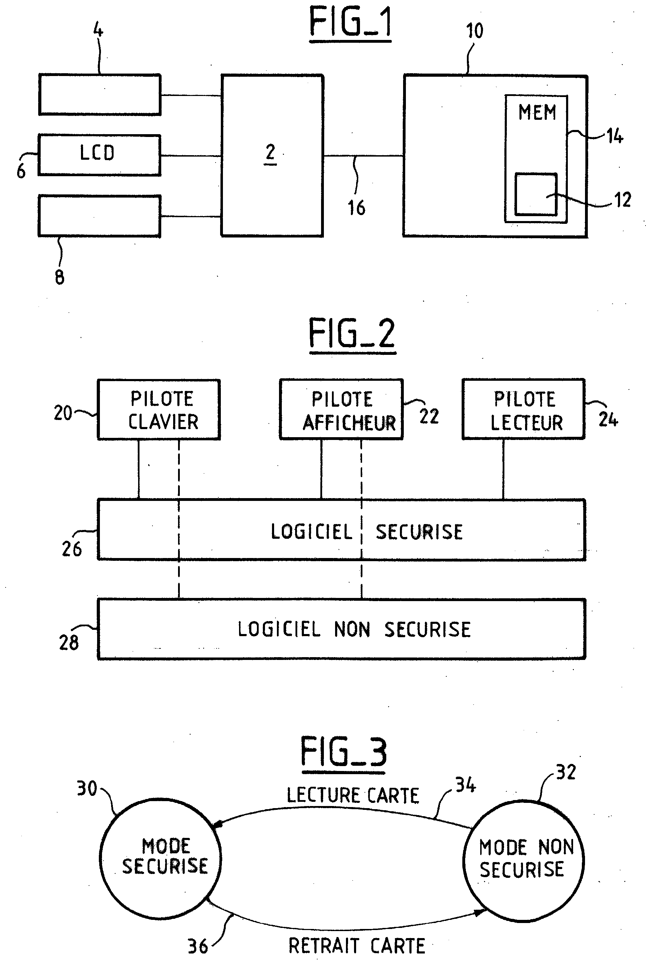

La figure 1 montre une vue schématique de l'architecture UNICAPT 16 (marque déposée) utilisée par la société Ingenico dans les terminaux de paiement, tels les terminaux Elite 510 et Elite 730 mentionnés plus haut. On a représenté à la figure 1 la partie sécurisée 2 du terminal, qui est reliée à l'afficheur 6, au lecteur de carte 4 et au clavier 8. Cette partie sécurisée 2 est par exemple réalisée par un composant sécurisé du type commercialisé sous la référence DS5002 par la société DALLAS. Un composant non sécurisé 10 est relié par une liaison 16 au protocole i2c à la partie sécurisée 2 du terminal. Ce composant non sécurisé 10 permet le téléchargement d'applications représentées schématiquement en 12 sur la figure 1, dans une mémoire 14 du composant 10.

Une application 12 non sécurisée ne peut accéder directement à l'afficheur et au clavier. En d'autres termes, il n'est pas permis dans une application non sécurisée d'adresser directement l'afficheur ni de recueillir directement depuis le clavier des informations entrées par l'utilisateur. Tout accès de l'application non sécurisée 12 à l'afficheur 4 et au clavier 6 s'effectue à travers la partie sécurisée 2 du terminal. Plus spécifiquement, une solution consiste à autoriser l'application non sécurisée 12 à afficher des informations sur l'afficheur 4, mais à bloquer les touches du clavier lorsque de telles informations sont affichées; de la sorte, même si l'application non sécurisée invite l'utilisateur à entrer sur le clavier son code d'identification personnel, le code entré par l'utilisateur sur le clavier ne sera pas transmis à l'application. Cette solution assure la sécurité requise. Elle ne permet toutefois pas à une application de recueillir des données entrées sur le clavier par l'utilisateur.

Une autre solution consiste à mettre en place une signature des affichages. Les affichages sont autorisés, par exemple par le possesseur du terminal. La partie sécurisée du terminal peut autoriser une application non sécurisée à utiliser le clavier lorsque la partie sécurisée constate que l'affichage transmis vers l'afficheur est un affichage autorisé présentant une signature. Cette solution alourdit le temps de développement des applications; toute modification d'une application non sécurisée implique d'obtenir de nouvelles signatures des affichages. Cette solution est décrite dans US-A-5 493 613 ou dans US-A-6 226 749.

Il existe donc un besoin d'un terminal de paiement, qui satisfasse aux contraintes de sécurité, mais qui permette pourtant l'implantation simple et l'exécution d'applications.

L'invention propose donc, dans un mode de réalisation, un terminal de paiement, présentant un clavier, un afficheur et un lecteur de carte, un premier logiciel adapté à piloter le clavier, l'afficheur et le lecteur de carte, un deuxième logiciel adapté à accéder au clavier et à l'afficheur par l'intermédiaire du premier logiciel, le premier logiciel étant adapté à restreindre l'accès du deuxième logiciel au clavier ou à l'afficheur dès qu'une carte est reçue dans le lecteur de carte.

On peut aussi prévoir que le terminal présente une ou plusieurs des caractéristiques suivantes :
- le premier logiciel est adapté à restreindre l'accès du deuxième logiciel au clavier et à l'afficheur dès qu'une carte est reçue dans le lecteur de carte;
- le premier logiciel est adapté à restreindre l'accès du deuxième logiciel au clavier ou à l'afficheur dès qu'une carte contenant une application donnée est reçue dans le lecteur de carte ;
- le premier logiciel est adapté à restreindre l'accès du deuxième logiciel au clavier ou à l'afficheur dès qu'une application donnée de la carte est sélectionnée par le terminal ;
- le terminal présente un état non sécurisé dans lequel le deuxième logiciel accède librement au clavier et à l'afficheur;
- le terminal passe dans l'état non sécurisé à l'expiration d'une durée après réception d'une carte dans le lecteur;
- le terminal passe dans l'état non sécurisé lorsqu'une carte est retirée du lecteur;
- le terminal passe dans l'état non sécurisé lorsque le premier logiciel reconnaît la saisie sur le clavier d'un code d'identification personnel;
- le clavier présente une touche de validation et le terminal passe dans l'état non sécurisé lorsque la touche de validation est actionnée;
- dans l'état non sécurisé, le deuxième logiciel accède librement au lecteur de carte.

L'invention propose encore un procédé d'exploitation d'un terminal de paiement présentant un clavier, un afficheur et un lecteur de carte, un premier logiciel adapté à piloter le clavier, l'afficheur et le lecteur de carte, et un deuxième logiciel adapté à accéder au clavier et à l'afficheur par l'intermédiaire du premier logiciel; le procédé comprend une étape de restriction par le premier logiciel de l'accès du deuxième logiciel au clavier ou à l'afficheur dès qu'une carte est reçue dans le lecteur de carte.

Le procédé peut comprendre une étape de lecture de la carte reçue dans le lecteur, le premier logiciel restreignant l'accès du deuxième logiciel au clavier ou à l'afficheur lorsqu'une application donnée est lue sur la carte.

Le procédé peut encore comprendre une étape de sélection d'une application de la carte par le terminal, le premier logiciel restreignant l'accès du deuxième logiciel au clavier ou à l'afficheur lorsqu'une application donnée est sélectionnée par le terminal.

Le procédé peut également comprendre une étape de libération de l'accès du deuxième logiciel au clavier et à l'afficheur.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue schématique de l'architecture d'un terminal de l'état de la technique;
- figure 2, une vue schématique de l'architecture logique d'un terminal selon l'invention;
- figure 3, un diagramme d'état du terminal de la figure 2.

L'invention propose un terminal de paiement, qui fonctionne suivant un mode sécurisé et suivant un mode non-sécurisé. Le terminal présente un logiciel sécurisé qui pilote le clavier, l'écran et le lecteur de carte du terminal. Il présente aussi un logiciel non sécurisé qui accède au clavier et à l'afficheur à travers le premier logiciel. Dans un mode sécurisé, le logiciel sécurisé restreint l'accès du logiciel non sécurisé au clavier ou à l'afficheur. Le terminal passe dans le mode sécurisé dès qu'une carte est reçue dans le lecteur. Ainsi, le terminal est sûr, mais permet aussi l'exécution d'applications non sécurisées.

La figure 2 montre une vue schématique de l'architecture logique d'un terminal selon l'invention. On a représenté à la figure le pilote de clavier 20, le pilote d'afficheur 22 et le pilote de lecteur 24. Les logiciels exécutés sur le terminal comprennent un logiciel sécurisé, représenté en 26 sur la figure 2; il s'agit typiquement du logiciel implanté d'origine par le fabricant du terminal. Le logiciel sécurisé 26 adresse les différents pilotes, comme représenté sur la figure 2 par les traits pleins reliant le logiciel sécurisé 26 et les pilotes 20, 22 et 24. La représentation de la figure 2 est une représentation de l'architecture logicielle et à proprement parler, le logiciel adresse les pilotes 20, 22 et 24. Par abus de langage, on dit aussi que le logiciel adresse l'écran, l'afficheur ou le clavier, bien qu'il existe une interface logicielle qui est le pilote correspondant.

Les logiciels exécutés sur le terminal comprennent aussi un logiciel non sécurisé, représenté en 28 sur la figure 2. Il peut par exemple s'agir d'un logiciel téléchargé par l'utilisateur du terminal. Le logiciel non sécurisé adresse les pilotes de clavier et d'afficheur 20 et 22 par l'intermédiaire du logiciel sécurisé 26, comme représenté sur la figure 2 par les traits interrompus qui relient le logiciel non sécurisé 28 aux pilotes 20 et 22 à travers le logiciel sécurisé 26.

Le terminal présente au moins deux modes de fonctionnement, comme représenté sur le diagramme d'état de la figure 3. Dans un mode sécurisé 30, le logiciel sécurisé 26 restreint l'accès du logiciel non sécurisé au pilote de clavier 20, au pilote d'afficheur 22 ou aux deux. La restriction dépend du niveau de sécurité souhaité; on peut laisser afficher des messages sur l'afficheur mais bloquer la saisie sur le clavier; on peut aussi interdire l'affichage sur l'afficheur tout en autorisant la saisie sur le clavier. On peut enfin interdire au logiciel non sécurisé tout accès au clavier et à l'afficheur. Dans une application avec un code d'identification personnel, il peut suffire de bloquer l'accès d'un logiciel non sécurisé au clavier pour empêcher que ce logiciel ne puisse recueillir un code saisi par l'utilisateur; on peut aussi interdire l'accès du logiciel non sécurisé à l'écran pour éviter toute invite à l'utilisateur pour qu'il saisisse son code.

Le terminal présente un deuxième mode de fonctionnement 32, qualifié de mode non sécurisé. Dans ce mode non sécurisé, le logiciel non sécurisé 28 adresse librement le pilote de clavier 20 et le pilote d'afficheur 22. Ceci permet à une application d'adresser librement l'afficheur et le clavier, sans contraintes particulières sur le développement de l'application. Le développement de l'application ou sa modification peut donc s'effectuer plus simplement que dans l'état de la technique.

Le terminal passe du mode non sécurisé au mode sécurisé dès qu'une carte est reçue dans le lecteur, comme représenté par la flèche 34 sur la figure 2. Dans le cas d'un lecteur de carte à mémoire, le passage du mode non sécurisé au mode sécurisé peut être effectué dès détection de la présence d'une carte dans le lecteur; on peut aussi passer du mode non sécurisé au mode sécurisé dès que le protocole de lecture de la mémoire de la carte à mémoire a reconnu une carte valide. Dans le cas d'un lecteur de piste magnétique, le passage du mode non sécurisé au mode sécurisé peut avoir lieu dès qu'une piste est lue par le lecteur. Si le terminal présente plusieurs lecteurs de carte - de types différents ou de même type - le passage du mode non sécurisé au mode sécurisé peut avoir lieu dès qu'une carte est lue dans un des lecteurs.

Le passage du mode non sécurisé en mode sécurisé peut également avoir lieu lorsqu'une carte contenant au moins une application spécifique donnée est lue dans le lecteur.

Ainsi, le premier logiciel sécurisé 26 est adapté à restreindre l'accès du deuxième logiciel non sécurisé 28 au clavier ou à l'afficheur selon le type de carte insérée dans le lecteur de carte ou selon le type d'application sélectionnée dans la carte. Les cartes peuvent en effet contenir plusieurs applications différentes que le terminal peut sélectionner. Par application, on entend des logiciels ou des répertoires embarqués dans la carte, tels que des logiciels (répertoires) de paiements type débit, de crédits, de fidélité, de répertoires, etc...

Ainsi, si une carte contenant une application bancaire est introduite dans le lecteur de carte, le premier logiciel peut restreindre l'accès du deuxième logiciel au clavier et à l'afficheur. Si une carte contenant simplement une application de fidélité client, le premier logiciel peut seulement restreindre l'accès au clavier et permettre l'affichage. Le protocole de lecture de carte lit la mémoire de la carte introduite dans le lecteur de carte et peut identifier le type d'application contenu dans la carte. Cette lecture est interprétée par le premier logiciel qui adapte alors en fonction la restriction d'accès du deuxième logiciel au clavier ou à l'afficheur. La restriction peut être adaptée seulement après sélection par le terminal de l'une des applications de la carte.

Le passage dans le mode sécurisé lorsqu'une carte est reçue dans le lecteur garantit la sécurité : une application non sécurisée ne peut inviter le porteur d'une carte à introduire son code d'identification personnel lorsque la carte est dans le terminal, ni recueillir ce code. Dans la mesure où les utilisateurs savent que le code d'identification personnel ne doit être introduit au clavier que lorsque la carte est dans le lecteur, le terminal de paiement est sûr.

Le passage du mode sécurisé 30 au mode non sécurisé 32 peut s'effectuer de différentes façons. Dans l'exemple de la figure 3, on a représenté le passage par la flèche 36, lorsque la carte est retirée du lecteur. Cette solution est notamment adaptée à des lecteurs de carte à mémoire. Elle assure que tant que la carte est dans le lecteur, le terminal reste dans le mode sécurisé. On peut aussi prévoir que le terminal passe dans le mode non sécurisé après reconnaissance par le logiciel sécurisé d'un code d'identification personnel. Dans ce cas, la sécurité repose sur l'hypothèse que l'utilisateur n'introduit pas deux fois de suite son code d'identification personnel. On peut aussi prévoir que le clavier présente une touche de validation et que le terminal passe dans le mode non sécurisé après une validation depuis le clavier; dans ce cas, la sécurité repose sur l'hypothèse que toute saisie du code d'identification personnel est suivi d'une validation depuis le clavier. Ceci revient à passer du mode sécurisé au mode non sécurisé lors d'une action sur une touche donnée du clavier. On pourrait aussi passer dans le mode non sécurisé lorsqu'une séquence de touches (et non pas seulement une seule touche) est activée sur le clavier. On peut aussi passer dans le mode non sécurisé à l'expiration d'une durée (fixe ou programmable) après le passage dans le mode sécurisé; ceci laisse la durée en cause pour que le logiciel sécurisé recueille le code d'identification personnel. Plus généralement, le passage du mode sécurisé au mode non sécurisé dépend du niveau de sécurité souhaité et des hypothèses comportementales du porteur de la carte.

A l'allumage, on peut démarrer le terminal dans l'un ou l'autre des modes. On peut notamment démarrer dans le mode sécurisé et passer dans le mode non sécurisé s'il s'avère que le lecteur ne contient pas de carte. Cette solution évite d'éventuels problèmes en cas de démarrage avec une carte introduite dans le lecteur.

Le terminal des figures 2 et 3 permet une grande liberté dans la conception, le développement ou la modification des applications non propriétaires ou non sécurisées. Il assure néanmoins un niveau de sécurité élevé.

Du point de vue matériel, le terminal des figures 2 et 3 peut être réalisé de façon quelconque. On peut utiliser une architecture matérielle semblable à celle de la figure 1, mais toute autre architecture matérielle est possible. La sécurité du terminal peut reposer uniquement sur les solutions logicielles, décrites à la figure 2, ou encore sur une combinaison de moyens logiciels et matériels.

Bien entendu, la présente invention n'est pas limitée aux modes de réalisations décrits à titre d'exemple; ainsi, on peut prévoir plus d'états que ne le montre la figure 3. On peut aussi prévoir que le changement d'état du terminal s'effectue autrement que ne le représente la figure 3. Ainsi, on pourrait repasser en mode non sécurisé après lecture d'une carte et après avoir identifié que la carte n'est pas une carte protégée; cette solution permettrait l'utilisation du terminal pour la lecture et l'écriture sur des cartes gérées par le logiciel non sécurisé 28 et ne seraient pas nécessairement reconnues par le logiciel sécurisé. On peut prévoir, notamment dans ce cas, que le logiciel non sécurisé peut aussi adresser le pilote de lecteur 24 dans le mode non sécurisé.

On peut encore prévoir comme dans l'état de la technique, des solutions de signature des affichages. Autrement dit, la restriction mise en oeuvre par le logiciel sécurisé n'est pas nécessairement comme dans l'exemple une interdiction totale, mais peut reposer sur un mécanisme de signature ou d'autorisation.

### Liste des références

- 2: partie sécurisée
- 4: afficheur
- 6: lecteur de carte
- 8: clavier
- 10: composant non sécurisé
- 12: application
- 14: mémoire du composant non sécurisé
- 16: liaison
- 20: pilote clavier
- 22: pilote afficheur
- 24: pilote lecteur
- 26: logiciel sécurisé
- 28: logiciel non sécurisé
- 30: mode sécurisé
- 32: mode non sécurisé
- 34: lecture de carte
- 36: retrait de carte

## Revendications

1. Un terminal de paiement, présentant un clavier (20), un afficheur (22) et un lecteur de carte (24), un premier logiciel (26) adapté à piloter le clavier (20), l'afficheur (22) et le lecteur de carte (24), un deuxième logiciel (28) adapté à accéder au clavier (20) et à l'afficheur (22) par l'intermédiaire du premier logiciel, ledit terminal présentant au moins les deux états suivants :
• un état non sécurisé dans lequel le deuxième logiciel accède librement au clavier et à l'afficheur ;
• un état sécurisé dans lequel l'accès du deuxième logiciel au clavier ou à l'afficheur est interdit ou soumis à un mécanisme d'autorisation par le premier logiciel ; et ledit terminal étant **caractérisé en ce qu'**il met en oeuvre des moyens de détection de la présence d'une carte dans ledit lecteur de carte, ladite détection de la présence d'une carte dans ledit lecteur de carte passant ledit terminal dudit état non sécurisé audit état

2. Le terminal de la revendication 1, **caractérisé en ce que**, dans ledit état sécurisé, l'accès du deuxième logiciel au clavier ou à l'afficheur est interdit ou soumis à un mécanisme d'autorisation par le premier logiciel lorsqu'application donnée est identifiée dans la mémoire lue de ladite carte détectée dans le lecteur de carte.

3. Le terminal de la revendication 2, **caractérisé en ce que**, dans ledit état sécurisé, l'accès du deuxième logiciel au clavier ou à l'afficheur est interdit ou soumis à un mécanisme d'autorisation par le premier logiciel lorsque ladite application donnée identifiée dans ladite mémoire de ladite carte détectée dans le lecteur de carte est sélectionnée par le terminal.

4. Le terminal de la revendication 1, **caractérisé en ce que** le terminal passe dans l'état non sécurisé à l'expiration d'une durée après ladite détection de la présence de ladite carte dans le lecteur.

5. Le terminal de la revendication 1, **caractérisé en ce que** le terminal passe dans l'état non sécurisé lorsque ladite carte est retirée du lecteur.

6. Le terminal de la revendication 1, **caractérisé en ce que** le terminal passe dans l'état non sécurisé lorsque le premier logiciel reconnaît la saisie sur le clavier d'un code d'identification personnel.

7. Le terminal de la revendication 1, **caractérisé en ce que** le clavier présente une touche de validation et **en ce que** le terminal passe dans l'état non sécurisé lorsque la touche de validation est actionnée.

8. Le terminal de la revendication 1, **caractérisé en ce que** dans l'état non sécurisé, le deuxième logiciel accède librement au lecteur de carte.

9. Un procédé d'exploitation d'un terminal de paiement présentant un clavier (20), un afficheur (22) et un lecteur de carte (24), un premier logiciel (26) adapté à piloter le clavier (20), l'afficheur (22) et le lecteur de carte (24), un deuxième logiciel (28) adapté à accéder au clavier (20) et à l'afficheur (22) par l'intermédiaire du premier logiciel, lequel premier logiciel permet de restreindre l'accès au clavier ou à l'afficheur du deuxième logiciel dans un état sécurisé, **caractérisé en ce que** le procédé comprend :
• une étape de détection de la présence d'une carte dans le lecteur de carte, ladite détection de la présence d'une carte dans le lecteur de carte faisant passer ledit terminal d'un état non sécurisé audit état sécurisé.

10. Le procédé de la revendication 9, **caractérisé en ce qu'**il comprend une étape de lecture de la mémoire de la carte détectée dans le lecteur et **en ce que** ladite étape d'interdiction ou de soumission à un mécanisme d'autorisation par le premier logiciel de l'accès du deuxième logiciel au clavier ou à l'afficheur est mise en oeuvre lorsqu'une application donnée est identifiée dans ladite mémoire lue de la carte.

11. Le procédé de la revendication 10, **caractérisé en ce qu'**il comprend une étape de sélection d'une application de la carte par le terminal et **en ce que** ladite étape d'interdiction ou de soumission à un mécanisme d'autorisation par le premier logiciel de l'accès du deuxième logiciel au clavier ou à l'afficheur est mise en oeuvre lorsque ladite application donnée identifiée dans ladite mémoire lue de la carte est sélectionnée par le terminal.

12. Le procédé de l'une des revendications 9 à 11, **caractérisé en ce qu'**il comprend une étape d'accès libre du deuxième logiciel au clavier et à l'afficheur.

## Patentansprüche

1. Zahlungsterminal, umfassend eine Tastatur (20), eine Anzeige (22) und einen Kartenleser (24), eine erste Software (26), die ausgelegt ist, die Tastatur (20), die Anzeige (22) und den Kartenleser (24) zu steuern, eine zweite Software (28), die ausgelegt ist, auf die Tastatur (20) und auf die Anzeige (22) mit Hilfe der ersten Software zuzugreifen, wobei das Terminal mindestens die beiden folgenden Zustände aufweist:
- einen nicht-gesicherten Zustand, in dem die zweite Software frei auf die Tastatur und die Anzeige zugreift;
- einen gesicherten Zustand, in dem der Zugriff der zweiten Software auf die Tastatur oder auf die Anzeige untersagt ist oder einem Autorisierungsmechanismus durch die erste Software unterworfen ist;
und wobei das Terminal **dadurch gekennzeichnet ist, dass** dieses Mittel zur Erkennung des Vorliegens einer Karte in dem Kartenleser umfasst, wobei die Erkennung des Vorliegens einer Karte in dem Kartenleser das Terminal von dem nicht-gesicherten Zustand in den gesicherten Zustand versetzt.

2. Terminal nach Anspruch 1, **dadurch gekennzeichnet, dass**, in dem gesicherten Zustand, der Zugriff der zweiten Software auf die Tastatur oder auf die Anzeige untersagt ist oder einem Autorisierungsmechanismus durch die erste Software unterworfen ist, wenn eine gegebene Anwendung in dem gelesenen Speicher der in dem Kartenleser erkannten Karte identifiziert wird.

3. Terminal nach Anspruch 2, **dadurch gekennzeichnet, dass**, in dem gesicherten Zustand, der Zugriff der zweiten Software auf die Tastatur oder auf die Anzeige untersagt ist oder einem Autorisierungsmechanismus durch die erste Software unterworfen ist, wenn die gegebene Anwendung, die in dem Speicher der in dem Kartenleser erkannten Karte identifiziert wird, von dem Terminal ausgewählt wird.

4. Terminal nach Anspruch 1, **dadurch gekennzeichnet, dass** das Terminal nach Ablauf einer Dauer nach der Erkennung des Vorliegens der Karte in dem Leser in den nicht-gesicherten Zustand übergeht.

5. Terminal nach Anspruch 1, **dadurch gekennzeichnet, dass** das Terminal in den nicht-gesicherten Zustand übergeht, wenn die Karte aus dem Leser gezogen wird.

6. Terminal nach Anspruch 1, **dadurch gekennzeichnet, dass** das Terminal in den nicht-gesicherten Zustand übergeht, wenn die erste Software die Eingabe eines persönlichen Identifikationscodes auf der Tastatur erkennt.

7. Terminal nach Anspruch 1, **dadurch gekennzeichnet, dass** die Tastatur eine Validierungstaste aufweist, und dass das Terminal in den nicht-gesicherten Zustand übergeht, wenn die Validierungstaste gedrückt wird.

8. Terminal nach Anspruch 1, **dadurch gekennzeichnet, dass**, in dem nicht-gesicherten Zustand, die zweite Software frei auf den Kartenleser zugreift.

9. Verfahren zur Verwendung eines Zahlungsterminals, umfassend eine Tastatur (20), eine Anzeige (22) und einen Kartenleser (24), eine erste Software (26), die ausgelegt ist, die Tastatur (20), die Anzeige (22) und den Kartenleser (24) zu steuern, eine zweite Software (28), die ausgelegt ist, auf die Tastatur (20) und die Anzeige (22) mit Hilfe der ersten Software zuzugreifen, wobei die erste Software den Zugriff auf die Tastatur oder auf die Anzeige durch die zweite Software in einem gesicherten Zustand unterbinden kann, **dadurch gekennzeichnet, dass** das Verfahren umfasst:
- einen Schritt des Erkennens des Vorliegens einer Karte in dem Kartenleser, wobei die Erkennung des Vorliegens einer Karte in dem Kartenleser das Terminal von einem nicht-gesicherten Zustand in den gesicherten Zustand versetzt.

10. Verfahren nach Anspruch 9, **dadurch gekennzeichnet, dass** dieses einen Schritt des Lesens des Speichers der in dem Leser erkannten Karte umfasst, und dass der Schritt des Untersagens oder des Unterwerfens des Zugriffs der zweiten Software auf die Tastatur oder auf die Anzeige einem Autorisierungsmechanismus durch die erste Software durchgeführt wird, wenn eine gegebene Anwendung in dem gelesenen Speicher der Karte identifiziert wird.

11. Verfahren nach Anspruch 10, **dadurch gekennzeichnet, dass** dieses einen Schritt des Auswählens einer Anwendung der Karte durch das Terminal umfasst, und dass der Schritt des Untersagens oder des Unterwerfens des Zugriffs der zweiten Software auf die Tastatur oder auf die Anzeige einem Autorisierungsmechanismus durch die erste Software durchgeführt wird, wenn die gegebene Anwendung, die in dem gelesenen Speicher der Karte identifiziert wird, von dem Terminal ausgewählt wird.

12. Verfahren nach einem der Ansprüche 9 bis 11, **dadurch gekennzeichnet, dass** dieses einen Schritt des freien Zugreifens der zweiten Software auf die Tastatur und auf die Anzeige umfasst.

## Claims

1. A payment terminal having a pin-pad (20), a display (22) and a card reader (24), first software (26) adapted to drive the pin-pad (20), the display (22) and the card reader (24), second software (28) adapted to access the pin-pad (20) and display (22) via the first software, said terminal having at least the following two states:
• an non-secure state in which the second software freely accesses the pin-pad and display;
• a secure state in which access of the second software to the pin-pad or display is prohibited or submitted to an authorisation mechanism by the first software
and said terminal being **characterised in that** it uses means of detection of the presence of a card in said card reader, said detection of the presence of a card in said card reader transferring said terminal from the said non-secure state to said secure state.

2. Terminal according to Claim 1, **characterised in that**, in said secure state, access of the second software to the pin-pad or display is prohibited or submitted to an authorisation mechanism by the first software when a given application is identified in the read memory of said card detected in the card reader.

3. Terminal according to Claim 2, **characterised in that**, in said secure state, access of the second software to the pin-pad or display is prohibited or submitted to an authorisation mechanism by the first software when said given application identified in said memory of said card detected in the card reader is selected by the terminal.

4. Terminal according to Claim 1, **characterised in that** the terminal goes into the non-secure state at the end of a period after said detection of the presence of said card in the reader.

5. Terminal according to Claim 1, **characterised in that** the terminal goes into the non-secure state when said card is removed from the reader.

6. Terminal according to Claim 1, **characterised in that** the terminal goes into the non-secure state when the first software recognises the entry on the pin-pad of a personal identification code.

7. Terminal according to Claim 1, **characterised in that** the pin-pad has a validation key and **in that** the terminal goes into the non-secure state when the validation key is operated.

8. Terminal according to Claim 1, **characterised in that**, in the non-secure state, the second software freely accesses the card reader.

9. A method for operating a payment terminal having a pin-pad (20), a display (22) and a card reader (24), first software (26) adapted to drive the pin-pad (20), the display (22) and the card reader (24), second software (28) adapted to access the pin-pad (20) and display (22) via the first software, by means of which first software it is possible to restrict access to the pin-pad or to the display by the second software in a secure state, **characterised in that** the method comprises:
• a step of detection of the presence of a card in the card reader, said detection of the presence of a card in the card reader causing said terminal to go from an non-secure state to said secure state.

10. Method according to Claim 9, **characterised in that** it comprises a step of reading the memory of the card detected in the reader and **in that** said step of prohibition or of submission to an authorisation mechanism, by the first software, of access of the second software to the pin-pad or to the display is implemented when a given application is identified in said read memory of the card.

11. Method according to Claim 10, **characterised in that** it comprises a step of selection of an application of the card by the terminal and **in that** said step of prohibition or of submission to an authorisation mechanism, by the first software, of access of the second software to the pin-pad or to the display is implemented when said given application identified in said read memory of the card is selected by the terminal.

12. Method according to any one of Claims 9 to 11, **characterised in that** it comprises a step of free access of the second software to the pin-pad and to the display.
